# EUROPEAN PATENT SPECIFICATION

(11) **EP 2 168 851 B1**
(45) Date of publication and mention of the grant of the patent: **05.03.2014**
(21) Application number: 09251879.4
(22) Date of filing: 27.07.2009
(51) Int. Cl.: B62J 6/00, B62J 1/12

(54) **Vehicle lamp supporting structure**
Fahrzeuglampen-Haltestruktur
Structure de support de phare de véhicule

(30) Priority: 25.09.2008 JP 2008246039
(43) Date of publication of application: 31.03.2010
(73) Proprietor: Honda Motor Co., Ltd., Minato-ku Tokyo (JP)
(72) Inventor: Isomura, Mamoru, Wako-shi Saitama, 351-0193 (JP)
(74) Representative: Stevens, Jason Paul

(56) References cited:
- GB-A- 2 392 894
- JP-U- 54 071 979
- JP-U- 58 164 883
- US-A- 6 053 626

## Description

The present invention relates to a vehicle lamp supporting structure and, more specifically, to a structure for supporting direction indicators provided on a rear portion of a motorcycle (rear direction indicators).

A vehicle lamp supporting structure is already known in which a stay configured to support rear direction indicators is demountably mounted on a rear portion of a seat frame which constitutes a vehicle body frame (for example, see JP-A-2004-98881).

In the vehicle lamp supporting structure described in JP-A-2004-98881, since the stay configured to support the rear direction indicators is mounted directly on the seat frame, it is necessary to specifically adapt the seat frame, for example by providing a boss projecting from the seat frame. Also, since the boss which projects from a position near a rear end of the seat frame is present, it is necessary to take action to avoid interference of the boss with other components when carrying the vehicle body frame or the like.

In view of such circumstances, it is an object of at least the preferred embodiments of the present invention to provide a vehicle lamp supporting structure which eliminates the need to modify the seat frame.

According to a first aspect of the present invention, there is provided a vehicle lamp supporting structure in accordance with claim 1.

Since the lamp stay is mounted on the seat catch which is mounted on the vehicle body frame for locking and unlocking the opening and closing seat, the necessity of providing specific means for mounting the lamp stay is eliminated.

Further, since parts of the lamp stay are formed of the rod-shaped members instead of forming all the parts of plate-shaped members, the lamp stay is prevented from increasing in weight excessively.

In a preferred form, the supporting member has a flat plate shape and the supporting member is formed with a rib by being bent at part of an outer peripheral edge portion thereof.

As a result, the rigidity of the supporting member-is-Improved. Accordingly, reduction of the thickness of the supporting member is also possible and the lamp stay is prevented from increasing in weight excessively.

More preferably, the vehicle lamp is a pair of left and right direction indicators provided on a rear portion of the vehicle, and a pair of the left and right rod-shaped portions extend downward from both end portions of the seat catch in terms of the direction of width of the vehicle, the single flat plate-shaped supporting member extends In the direction of width of the vehicle and is attached to end portions of the pair of left and right rod-shaped portions, the supporting member is bent at both widthwise end portions to form ribs extending in the vertical direction, and the direction indicators are mounted on the ribs respectively.

Accordingly, the pair of left and right direction indicators are supported by the single supporting member. Therefore, reduction of the number of components is achieved in comparison with a case in which supporting members of the stay configured to support the pair of left and right direction indicators are provided respectively, so that reduction of the manufacturing cost is achieved. Also, since the pair of left and right direction indicators are supported so as to be connected to each other, the pair of left and right direction indicators may be supported firmly. Since the direction indicators are supported by the rib portions formed by bending the ends of the supporting member, the pair of left and right direction indicators may be supported firmly.

A preferred embodiment of the invention will now be described by way of example only and with reference to the accompanying drawings, in which:
Fig. 1 is a left side view of a motorcycle on which a vehicle lamp supporting structure according to a preferred embodiment of the present invention is mounted;
Fig. 2 is a drawing of a cross member of a vehicle body frame shown in Fig. 1, in which (a) is an enlarged side view of a portion in the periphery of the cross member, and (b) is an enlarged plan view of a portion in the periphery of the cross member;
Fig. 3 is an enlarged side view of a portion in the periphery of a rear fender shown in Fig. 1;
Fig. 4 is a perspective view of a portion in the periphery of a seat catch shown in Fig. 3 viewed from behind and from the left;
Fig. 5 is a rear view of the seat catch, a lamp stay, and rear direction indicators shown in Fig. 4 viewed from behind; and
Fig. 6 is a perspective view of the seat catch, the lamp stay, and the rear direction indicators shown in Fig. 4 viewed from behind and from the right.

Referring now to the drawings, a preferred embodiment of a vehicle lamp supporting structure according to the present invention will be described in detail. The drawings are to be viewed in the direction in which the reference numerals are oriented in the right way, and "front", "rear", "left", "right", "up", and "down" are used in the following description with reference to a rider. The forward of the vehicle is designated by Fr, the rearward thereof is designated by Rr, the left side is designated by L, the right side is designated by R, the upward is designated by U, and the downward is designated by D.

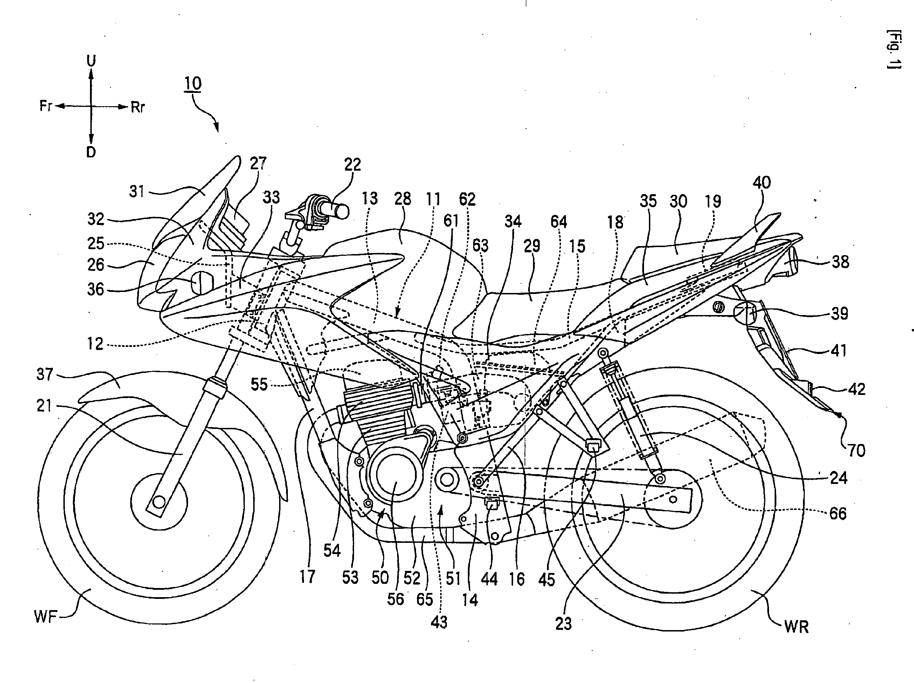

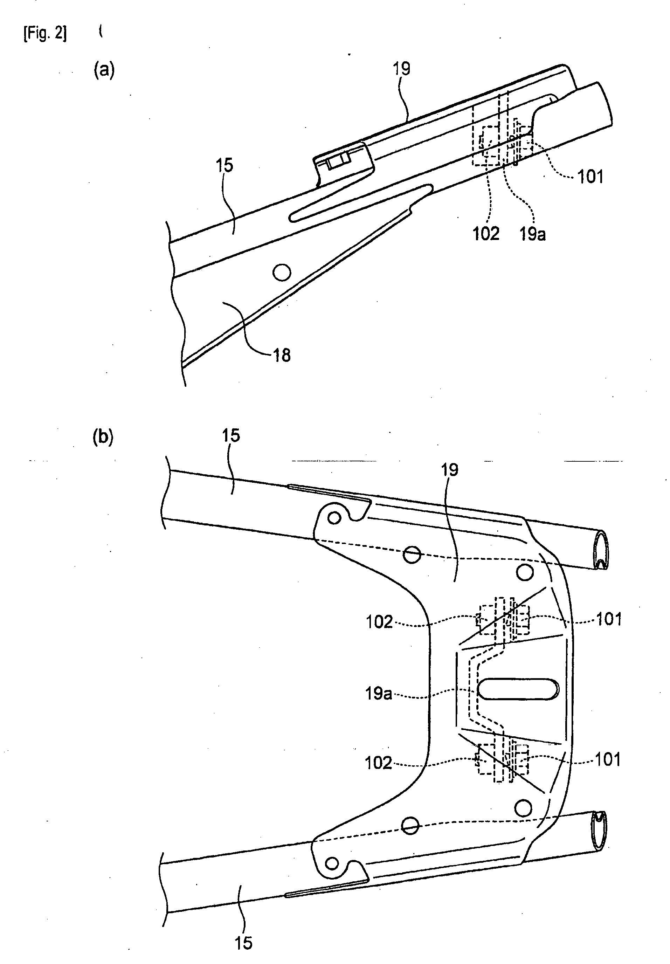

As shown in Fig. 1 and Fig. 2, a motorcycle 10 includes a vehicle body frame 11 having: a head pipe 12 provided at a front end; a main frame 13 extending rearward, and then rearward and downward from the head pipe 12; pivot plates 14 joined to rear end portions of the main frame 13; a pair of left and right seat frames 15 joined to midsections of the main frame 13 and extending rearward and upward; a pair of left and right sub frames 16 joined to the pivot plates 14, extending rearward and upward, and joined to rear end portions of the seat frames 15 at rear end portions thereof; down tubes 17 extending rearward and downward from the head pipe 12; reinforcing members 18 configured to connect the rear end portions of the seat frames 15 and the rear end portions of the sub frames 16; and a cross member 19 configured to connect the rear end portions of the seat frames 15 in the widthwise direction of the vehicle. The motorcycle also includes an engine 50 and a transmission 51 provided integrally with an end portion of the engine 50, mounted on the main frame 13, the pivot plates 14, and the down tubes 17.

The motorcycle 10 further includes a front fork 21 configured to be steerably supported by the head pipe 12, a front wheel WF rotatably supported at a lower end portion of the front fork 21, a steering handle 22 mounted on an upper end portion of the front fork 21, swing arms 23 swingably supported by the pivot plates 14, a rear wheel WR rotatably supported at rear end portions of the swing arms 23, a cushion unit 24 joined to the swing arms 23 and the reinforcing members 18, a headlight 26 and a meter 27 mounted on the head pipe 12 via front stays 25, a fuel tank 28 fixed above the main frame 13, and a rider seat 29 and a passenger seat 30 provided above the seat frames 15.

Reference numeral 31 in Fig. 1 designates a windscreen, reference numeral 32 designates a front top cowl, reference numeral 33 designates a front cowl, reference numeral 34 designates a side cowl, reference numeral 35 designates a rear cowl, reference numeral 36 designates a front direction indicator, reference numeral 37 designates a front fender, reference numeral 38 designates a tail light, reference numeral 39 designates a rear direction indicator, reference numeral 40 designates a grab rail, reference numeral 41 designates a license plate, reference numeral 42 designates a reflector, reference numeral 43 designates a fuel pump, reference numeral 44 designates a main step, and reference numeral 45 designates a pillion step.

In the motorcycle shown in Figure 1, the engine 50 is a single cylinder engine. As shown in Fig. 1, an outer shell of the engine mainly includes a crankcase 52, a cylinder block 53 attached to a front upper end portion of the crankcase 52, a cylinder head 54 attached to an upper end portion of the cylinder block 53, a cylinder head cover 55 configured to cover an opening on an upper portion of the cylinder head 54, an ACG (AC generator) cover 56 configured to cover an opening on a left side surface of the crankcase 52, and a clutch cover (not shown) configured to cover an opening on a right side surface of the crankcase 52.

As shown in Fig. 1, a throttle body 62 is connected to an air inlet port (not shown) formed on a rear wall portion of the cylinder head 54 via an air intake tube 61, and an air cleaner 64 is connected to an upstream end of the throttle body 62 via a connecting tube 63. Also, a muffler 66 is connected to an exhaust port (not shown) formed on a front wall portion of the cylinder head 54 via an exhaust tube 65.

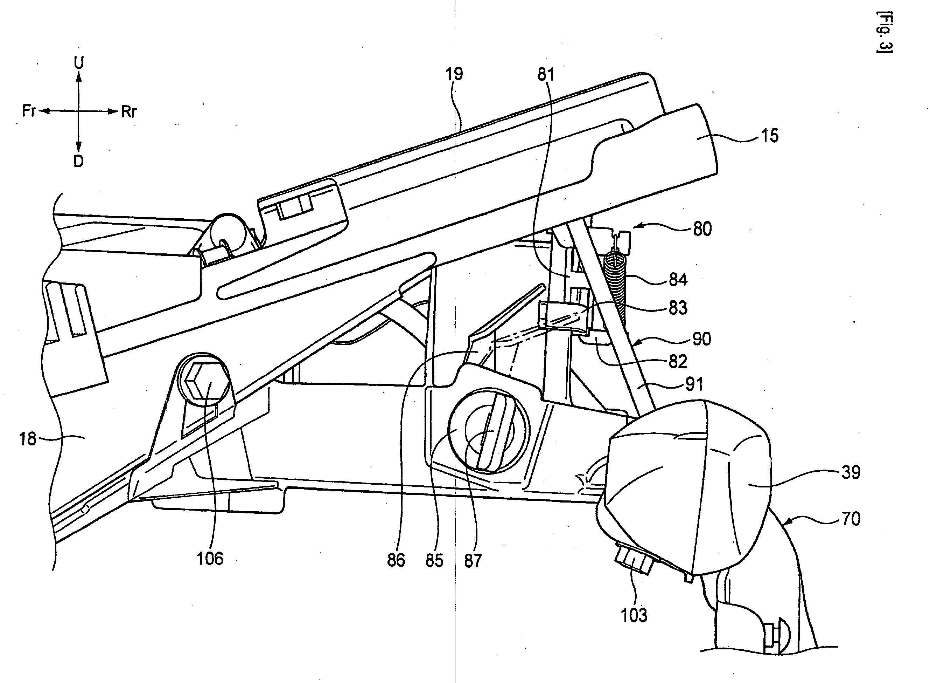

As shown in Fig. 1 and Fig. 3, a rear fender 70 configured to cover the upward of the rear wheel WR is provided at a rear portion of the motorcycle 10.

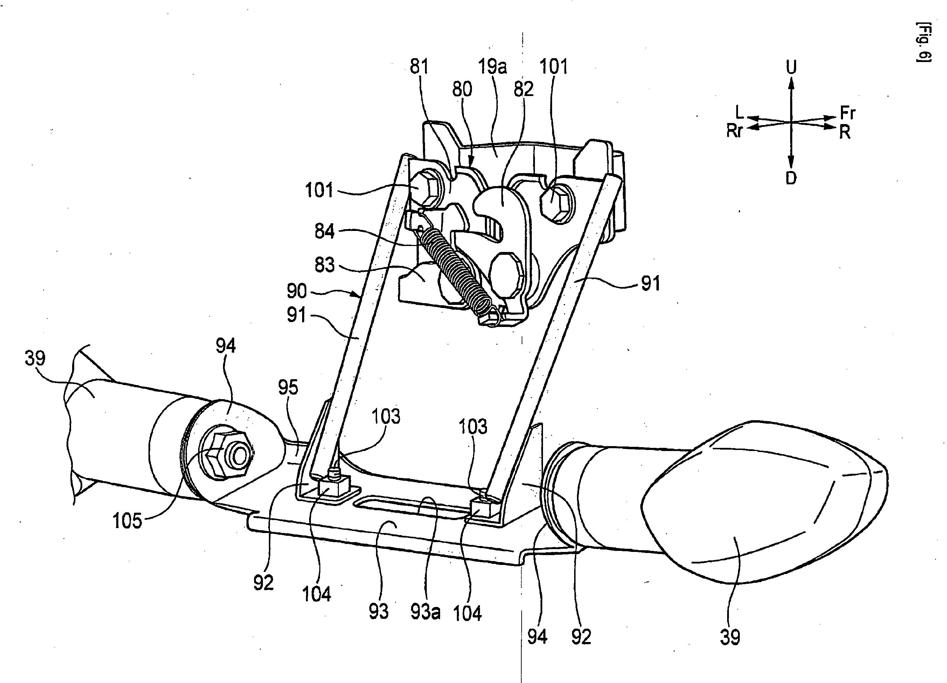

As shown in Fig. 2 to Fig. 6, a bracket 19a is integrally formed extending downwardly from a lower surface of the cross member 19, and a seat catch 80 configured to lock and unlock an opening and closing passenger seat 30 (seat lock) is detachably secured to the bracket 19a with bolts 101, 101. As shown in Fig. 2, welding nuts 102 are fixed to a front surface of the bracket 19a, and the bolts 101 are screwed into the welding nuts 102 from the rear of the motorcycle.

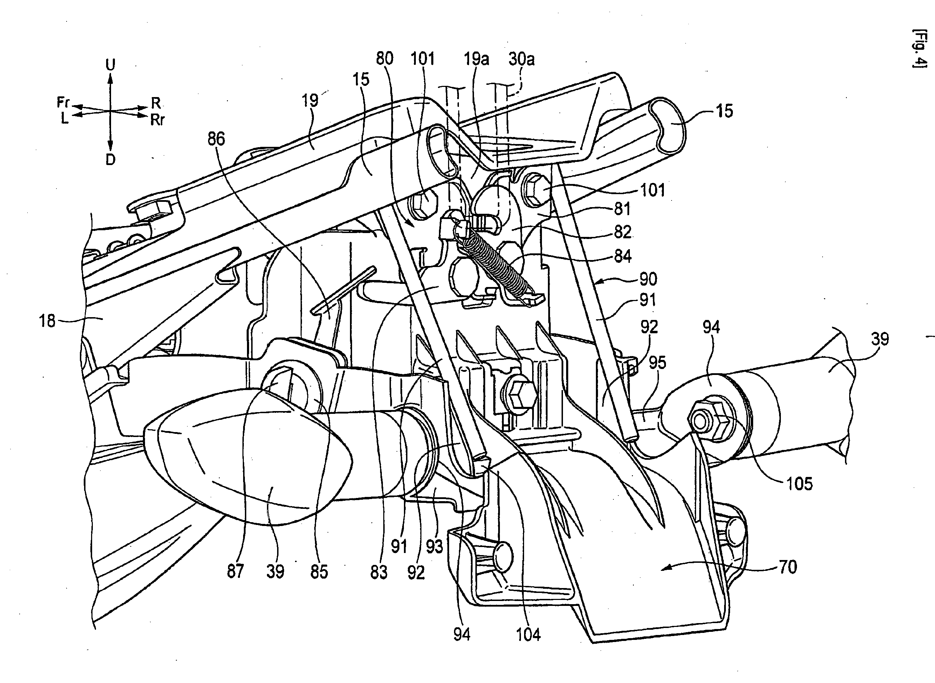

The seat catch 80 is a member configured to lock and unlock a substantially U-shaped striker 30a (see Fig. 4) mounted on a lower rear surface of the passenger seat 30. The seat catch 80 includes a base plate 81 secured to the bracket 19a with the bolts 101, 101, a hook member 82 configured to be mounted swingably on the right side of the base plate 81, a retainer member 83 configured to be mounted swingably on the left side of the base plate 81, and a tension spring 84 provided between the hook member 82 and the retainer member 83.

The hook member 82 is a lock member configured to lock and unlock the striker 30a. The retainer member 83 is a lock holding member configured to retain the hook member 82 to maintain a locked state between the hook member 82 and the striker 30a. The tension spring 84 is a resilient member configured to urge the hook member 82 and the retainer member 83 to constantly assume the locked state.

The seat catch 80 is operable by a key cylinder 85 mounted on a left side surface of the fender 70. By an unlocking operation of the key cylinder 85, an arm portion 86 provided on the key cylinder 85 swings (as shown by alternate long and short dashes in Fig. 3), and the hook member 82 and the retainer member 83 are moved into an unlocked state. Reference numeral 87 in Fig. 3 denotes a key for operating the key cylinder 85.

In this embodiment, as shown in Fig. 4 to Fig. 6, a lamp stay 90 which is configured to mount left and right rear direction indicators 39 (the vehicle lamp) is attached to the base plate 81 of the seat catch 80.

The lamp stay 90 includes a pair of left and right rod-shaped portions 91, one pair of ends of which are welded to both widthwise end portions of the base plate 81 of the seat catch 80 and extend downward, connecting brackets 92 welded to the other ends of the pair of left and right rod-shaped portions 91 respectively, and a single flat plate portion (supporting member) 93 secured to the connecting brackets 92, 92 with bolts 103, 103, which is configured to allow the rear direction indicators 39 to be mounted on both end portions in the widthwise direction of the vehicle. Welding nuts 104 are fixed to upper surfaces of the connecting brackets 92, and the bolts 103 are screwed into the welding nuts 104 from below.

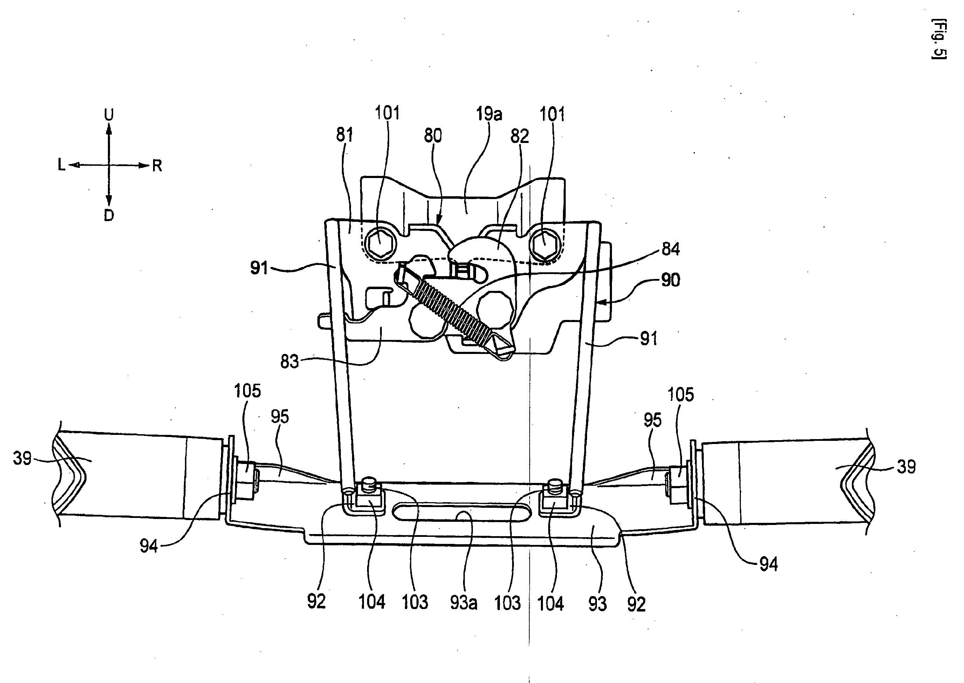

The flat plate portion 93 is formed with ribs 94, 94, 95, and 95, which are formed by bending upwards the end edge portions in the widthwise direction of the vehicle and a front edge portion of an outer peripheral edge portion thereof. The rear direction indicators 39 are secured to the ribs 94, 94 at the end edge portions of the flat plate portion 93 in the widthwise direction of the vehicle with nuts 105. Reference numeral 93a in Fig. 5 designates an opening for reducing the weight of the flat plate portion 93.

In this embodiment, as shown in Fig. 3 and Fig. 4, the rear fender 70 is secured at a midsection thereof on outer side surfaces of the reinforcing members 18 with bolt 106, and at a rear upper portion thereof is secured together between the bracket 19a and the seat catch 80 with the bolts 101, 101, and also at a rear lower portion thereof is secured together between the connecting brackets 92 of the lamp stay 90 and the flat plate portion 93 with the bolts 103, 103. Accordingly, the rear fender 70 is mounted on the vehicle body frame 11 so as to be suspended by the lamp stay 90 (specifically, by the rod-shaped portions 91). In other words, the rear fender 70 is mounted on the vehicle body frame 11 via the lamp stay 90.

As described thus far, according to the preferred embodiment of the vehicle lamp supporting structure, the lamp stay 90 configured to mount the rear direction indicators 39, 39 thereon is mounted on the seat catch 80, which in turn is mounted on the vehicle body frame 11 for locking and unlocking the opening and closing passenger seat 30. Hence, there is no need to provide specific mounting means for mounting the lamp stay 90 configured to support the rear direction indicators 39, 39 on the seat frames 15 on the side of the vehicle body frame 11.

According to the preferred embodiment, the lamp stay 90 includes the rod-shaped portions 91, the one end of which is attached to the seat catch 80, and the flat plate portion 93 which is attached to the other ends of the rod-shaped portions 91 and allows the rear direction indicators 39, 39 to be mounted thereon. As parts of them are formed of the rod-shaped members instead of forming all the parts of plate-shaped members, the lamp stay 90 is prevented from increasing in weight excessively.

According to the preferred embodiment, the flat plate portion 93 is formed with ribs 94, 94, 95, and 95 by being bent upward at both end edge portions in the widthwise direction of the vehicle and the front edge portion of the outer peripheral edge portion thereof, so that the rigidity of the flat plate portion 93 is improved. Accordingly, reduction of the thickness of the flat plate portion 93 is also possible and the lamp stay 90 is prevented from increasing in weight excessively.

According to the preferred embodiment, the pair of left and right rod-shaped portions 91 extend downward from the widthwise end portions of the base plate 81 of the seat catch 80, the single flat plate portion 93 extending in the widthwise direction of the vehicle is mounted on the end portions of the pair of left and right rod-shaped portions 91, the flat plate portion 93 is bent at the end portions in the widthwise direction of the vehicle to form the ribs 94, 94 extending in the vertical direction, and the rear direction indicators 39 are mounted respectively to the ribs 94, 94, so that the pair of left and right rear direction indicators 39 are supported by the single flat plate portion 93. Therefore, reduction of the number of components is achieved in comparison with a case in which flat plate portions of the stay configured to support the pair of left and right rear direction indicators 39 are provided respectively, so that a reduction of manufacturing cost is achieved. Also, since the pair of left and right rear direction indicators 39 are supported so as to be connected to each other, the pair of left and right rear direction indicators 39 may be supported firmly. Also, since the rear direction indicators 39 are supported by the ribs 94, 94 formed by bending the ends of the flat plate portion 93, the pair of left and right rear direction indicators 39 may be supported firmly.

## Claims

1. A vehicle lamp supporting structure configured to support a lamp (39) on a vehicle body frame, comprising a seat catch (80) adapted to be mounted on said vehicle body frame for locking and unlocking a vehicle seat,
**characterized in that** the lamp supporting structure includes a lamp stay (90) and **in**
**that** the seat catch includes a seat catch base plate (81), said lamp stay comprises a pair of rod-shaped portions (91) having one end attached to said seat catch base plate (81) and the other end attached to a supporting member (93), said supporting member (93) having the vehicle lamp (39) mounted thereon.

2. The vehicle lamp supporting structure according to claim 1, wherein the supporting member (93) has a flat plate shape, and
the supporting member (93) is formed with a rib (94, 95) by being bent at part of an outer peripheral edge portion thereof.

3. The vehicle lamp supporting structure according to claim 1 or claim 2, wherein
the vehicle lamp is a pair of left and right direction indicators (39) provided on a rear portion of the vehicle, and
a pair of the left and right rod-shaped portions (91) extend downward from both end portions of the seat catch (80, 81) in terms of the direction of width of the vehicle,
the single flat plate-shaped supporting member (93) extends in the direction of width of the vehicle and is attached to end portions of the pair of left and right rod-shaped portions (91),
the supporting member (93) is bent at both widthwise end portions to form ribs (94) extending In the vertical direction, and
the direction indicators (39) are mounted on the ribs (94) respectively.

## Patentansprüche

1. Trägerkonstruktion für eine Fahrzeuglampe, die ausgestaltet ist, um eine Lampe (39) an einem Fahrzeug-Karosserierahmen zu tragen, umfassend eine Sitzbankverrastung (80), die eingerichtet ist, um an dem Fahrzeug-Karosserierahmen zum Einrasten und Ausrasten einer Fahrzeugsitzbank montiert zu werden,
**dadurch gekennzeichnet, dass** die Trägerkonstruktion für die Lampe eine Lampenhalterung (90) aufweist und dass die Sitzbankverrastung eine Sitzbankverrastungs-Basisplatte (81) aufweist, wobei die Lampenhalterung ein Paar stangenförmige Abschnitte (91) umfasst, von denen ein Ende an der Sitzbankverrastungs-Basisplatte (81) befestigt ist und das andere Ende an einem Trägerelement (93) befestigt ist, wobei die Fahrzeuglampe (39) an dem Trägerelement (93) montiert ist.

2. Trägerkonstruktion für eine Fahrzeuglampe nach Anspruch 1, wobei das Trägerelement (93) eine flache Gestalt aufweist, und
das Trägerelement (93) dadurch mit einem Steg (94, 95) ausgebildet ist, dass ein Teil seines äußeren umfänglichen Kantenabschnitts umgebogen ist.

3. Trägerkonstruktion für eine Fahrzeuglampe nach Anspruch 1 oder Anspruch 2, wobei
die Fahrzeuglampe aus einem Paar linker und rechter Richtungsanzeiger (39) besteht, die an einem hinteren Abschnitt des Fahrzeugs zur Verfügung gestellt sind, und
sich ein Paar linker und rechter stangenförmiger Abschnitte (91) von beiden Endabschnitten der Sitzbankverrastung (80, 81) in Richtung der Breite des Fahrzeugs erstrecken,
das einzelne flache plattenförmige Trägerelement (93) sich in Richtung der Breite des Fahrzeugs erstreckt und an den Endabschnitten des Paares linker und rechter stangenförmiger Abschnitte (91) befestigt ist, das Trägerelement (93) an beiden breitseitigen Endabschnitten gebogen ist, um Stege (94) auszubilden, die sich in der vertikalen Richtung erstrecken, und die Richtungsanzeiger (39) jeweils an den Stegen (94) montiert sind.

## Revendications

1. Structure de support de phare de véhicule configurée pour supporter un phare (39) sur une caisse du véhicule, comprenant un cliquet de siège (80) qui est à même d'être monté sur ladite caisse de véhicule pour verrouiller et déverrouiller un siège de véhicule, **caractérisée en ce que** la structure de support de phare comprend un support de phare (90) et **en ce que** le cliquet de siège comprend une plaque de base de cliquet de siège (81), ledit support de lampe comprend une paire de portions (91) en forme de tiges ayant une première extrémité fixée à ladite plaque de base de cliquet de siège (81) et l'autre extrémité fixée à un élément de support (93), ledit élément de support (93) ayant le phare de véhicule (39) qui y est monté.

2. Structure de support de phare de véhicule selon la
revendication 1, dans laquelle :
l'élément de support (93) a une forme en plaque plate et
l'élément de support (93) est formé avec une nervure (94, 95) par repli sur une partie d'une portion de son bord périphérique externe.

3. Structure de support de phare de véhicule selon la revendication 1 ou la revendication 2, dans laquelle :
le phare du véhicule est une paire de clignotants de
gauche et de droite (39) aménagés sur une portion arrière du véhicule et
une paire de portions (91) en forme de tiges de gauche
et de droite s'étendent vers le bas depuis les deux portions du cliquet de siège (80, 81) en termes de sens de la largeur du véhicule,
le seul élément de support (93) en forme de plaque
plate s'étend dans le sens de la largeur du véhicule et est fixé aux portions d'extrémité de la paire de portions (91) en forme de tiges de gauche et de droite,
l'élément de support est replié aux deux portions
d'extrémité dans le sens de la largeur pour former des nervures (94) s'étendant dans la direction verticale et
les clignotants (39) sont montés sur les
nervures (94), respectivement.
